# EUROPEAN PATENT APPLICATION

(11) **EP 4 194 518 A1**
(43) Date of publication of application: **14.06.2023**
(21) Application number: 21852440.3
(22) Date of filing: 29.07.2021
(51) Int. Cl.: C09D 11/30

(54) **AQUEOUS PIGMENT DISPERSION FOR PRODUCING WATER-BASED INK-JET INK FOR PLASTIC SUBSTRATE, WATER-BASED INK-JET INK, AND PRINTED MATTER**

(30) Priority: 04.08.2020 JP 2020132271; 04.03.2021 JP 2021034272
(71) Applicant: DIC Corporation, Tokyo 174-8520 (JP)
(72) Inventor: SHIGEMORI Minoru, Sakura-shi, Chiba 285-8668 (JP); SUZUKI Naruhito, Sakura-shi, Chiba 285-8668 (JP); UJIGAWA Mari, Sakura-shi, Chiba 285-8668 (JP); NISHIJIMA Takashi, Sakura-shi, Chiba 285-8668 (JP); HATTORI Iwao, Sakura-shi, Chiba 285-8668 (JP); SASAKA Rikei, Tokyo 174-8520 (JP); MOCHIZUKI Naruhiko, Tokyo 103-8233 (JP)
(74) Representative: TBK
(86) International application number: PCT/JP2021/028035
(87) International publication number: WO 2022/030345

(57) **Abstract**

The present invention relates to an aqueous pigment dispersion for preparing an aqueous ink-jet ink. The dispersion contains a binder, a pigment, and an aqueous medium. The binder contains a urethane resin (A) that is a reaction product of a polyol (a1) including a polyol (a1-1) having an acid group and a polyol (a1-2) other than the polyol (a1-1) and a polyisocyanate (a2) including a polyisocyanate (a2-1) having an alicyclic structure and contains an aqueous medium (B). The acid group possessed by the urethane resin (A) is neutralized, the urethane resin (A) has the alicyclic structure in 500 to 5,000 mmol/kg, and the pigment is dispersed in the dispersion at a volume-average particle diameter of 50 to 400 nm.

## Description

### Technical Field

The present invention relates to an aqueous pigment dispersion for preparing aqueous ink-jet inks that can be suitably printed on plastic substrates, an aqueous ink-jet ink for plastic substrates prepared by diluting the aqueous pigment dispersion, and a printed matter obtained by ink-jet printing with the aqueous ink-jet ink.

### Background Art

The consumption of film packages tends to globally increase by an increase in population, an increase in income levels, and changes in logistic systems, and thereby the production volume of ink for packages is increasing year by year. In film package printing, solvent flexographic ink and solvent gravure ink are mainly used. However, these printing methods require platemaking and therefore have the problems that they are costly and take a long time until printing, and there is a growing demand for ink-jet printing that does not require platemaking even in film package printing and can print on demand.

At the same time, in addition to the viewpoint of sustainability against the backdrop of global expansion of worsening of air pollution due to VOC, global warming, and so on, from the concerning about occupational safety and health and flammability and explosibility, there is a movement of switching to non-petroleum resources, and regulations on the use of organic solvents are becoming stricter. Accordingly, in the printing ink industry, aqueous inks in which the organic solvent in solvent printing ink is replaced by water are being developed, and even in ink-jet inks, development and improvement of aqueous inks are demanded.

However, aqueous ink-jet inks, when compared to solvent ink-jet inks, have problems that adhesion to films, blocking resistance accompanied by offset of printed patterns, and ink discharge properties from ink-jet heads are still insufficient. More specifically, regarding head clogging failure that is caused by drying of the ink at the discharge portion of an ink jet head during the time (open time) of not discharging the ink when ink-jet printing is performed, improvement in ink resolubility, which allows prevention of head clogging, is also desired.

### Citation List

### Patent Literature

PTL 1: Japanese Unexamined Patent Application Publication No. 8-053641
PTL 2: Japanese Unexamined Patent Application Publication No. 5-171091
PTL 3: International Publication No. WO 2017/204073

### Summary of Invention

### Technical Problem

The problems to be solved by the present invention relates to an aqueous ink-jet ink for printing on plastic substrates, having excellent adhesion to plastic substrates, blocking resistance, and ink discharge properties during ink-jet printing; an aqueous pigment dispersion that can prepare the aqueous ink-jet ink; and a printed matter obtained by ink-jet printing with the ink-jet ink.

### Solution to Problem

The present inventors diligently studied to solve the above problems and, as a result, found that the problems can be solved by an aqueous pigment dispersion prepared by using a specific urethane resin as a binder, neutralizing an acid group of the urethane resin with a metal salt, organic amine, or the like, and further adjusting the dispersion average particle diameter of pigment particles in the aqueous pigment dispersion to 50 to 400 nm, and the present invention has been accomplished.

That is, the present invention relates to an aqueous pigment dispersion for preparing an aqueous ink-jet ink for plastic substrates, containing a binder, a pigment, and an aqueous medium, wherein the binder contains a urethane resin (A) that is a reaction product of a polyol (a1) including a polyol (a1-1) having an acid group and a polyol (a1-2) other than the polyol (a1-1) and a polyisocyanate (a2) including a polyisocyanate (a2-1) having an alicyclic structure and contains an aqueous medium (B), the acid group possessed by the urethane resin (A) is neutralized, and the urethane resin (A) includes the alicyclic structure within a range of 500 to 5,000 mmol/kg with respect to the whole urethane resin (A); and the pigment is dispersed in the aqueous pigment dispersion at a volume average particle diameter of 50 to 400 nm (provided that when the polyol (a1) does not include a polycarbonate polyol, the rate of the alicyclic structure possessed by the urethane resin (A) is 1,000 to 5,000 mmol/kg based on the whole urethane resin (A), and the acid group possessed by the urethane resin (A) is neutralized by a metal salt; and when the polyol (a1) includes a polycarbonate polyol, the urethane resin (A) is not chain-extended or is polyamine-extended).

In addition, the present invention relates to an aqueous ink-jet ink for plastic substrates prepared by diluting the aqueous pigment dispersion with an aqueous medium.

Furthermore, the present invention relates to a printed matter obtained by ink-jet printing with the aqueous ink-jet ink for plastic substrates.

### Advantageous Effects of Invention

According to the present invention, it is possible to obtain an aqueous ink-jet ink for printing on plastic substrates, having excellent adhesion to plastic substrates, blocking resistance, and ink discharge properties during ink-jet printing.

### Description of Embodiments

The "aqueous pigment dispersion for preparing an aqueous ink-jet ink for plastic substrates" (hereinafter, may be simply referred to as "aqueous pigment dispersion") of the present invention contains a binder, a pigment, and an aqueous medium and is used for preparing an aqueous ink-jet ink for plastic substrates.

### <Binder>

The binder in the present invention is an aqueous resin binder containing a urethane resin (A) and an aqueous medium (B) and is obtained by, for example, mixing the urethane resin (A) and the aqueous medium (B).

### (Urethane resin (A))

The urethane resin (A) in the present invention is obtained by reacting a polyol (a1) with a polyisocyanate (a2) .

### - Polyol (a1)

The polyol (a1) in the present invention includes a polyol (a1-1) having an acid group and a polyol (a1-2) other than the polyol (a1-1).

Examples of the polyol (a1-1) having an acid group include a polyol having a carboxyl group and a polyol having a sulfonate group.

Examples of the polyol having a carboxyl group include 2,2-dimethylolpropionic acid, 2,2-dimethylolbutanoic acid, and 2,2-dimethylolvaleric acid. In particular, 2,2-dimethylolpropionic acid and 2,2-dimetholbutanoic acid, which are satisfactory in dispersion stability, are preferred. Polyester polyols having a carboxyl group obtained by reacting a polyol having a carboxyl group with various polycarbonic acids can also be used. These polyols having a carboxyl group can be used alone or in combination of two or more.

Examples of the polyol having a sulfonate group include polyester polyols obtained by reacting a dicarboxylic acid, such as 5-sulfoisopthalic acid, sulfoterephthalic acid, 4-sulfophthalic acid, and 5-(4-sulfophenoxy)isophthalic acid, or a salt thereof with a low-molecular polyol, such as ethylene glycol, propylene glycol, 1,4-butanediol, 1,6-hexanediol, diethylene glycol, and neopentyl glycol. These polyols having a sulfonate group can be used alone or in combination of two or more.

The polyol (a1-1) having an acid group is preferably used within a range that makes the acid value of the urethane resin (A) between 10 to 50, more preferably between 10 to 35. Incidentally, the acid value mentioned in the present invention is a theoretical value calculated based on the amount of the acid group-containing compound used to manufacture the urethane resin (A), such as the polyol (a1-1) having an acid group.

In the present invention, a part or whole of the acid groups in the polyol (a1-1) having an acid group is neutralized. It is possible to express good dispersibility in water by partially or wholly neutralizing the acid groups.

The neutralization method is not particularly limited, and examples thereof include neutralization using a metal or an organic amine. However, when the polyol (a1) does not include a polycarbonate polyol described later, the neutralization is performed with a metal salt.

Although the metal to be used for the neutralization is not particularly limited, it is preferable to form a metal salt by neutralization with a metal ion, such as sodium, potassium, calcium, copper, and lithium. Moreover, at least a part of the acid groups may be neutralized to form a metal salt.

The metal ions, such as sodium, potassium, calcium, copper, and lithium, that can be used in neutralization of acid groups can be obtained from, for example, a metal hydroxide, such as sodium hydroxide, potassium hydroxide, and lithium hydroxide, a metal chloride, such as sodium chloride and potassium chloride, or a metal sulfide, such as copper sulfate.

Examples of the organic amine to be used for neutralization include polyalkyleneimines, polyallylamines, (poly)ethylenepolyamines, alkanolamines, and alkylamines.

Among them, alkylamines are preferable from the viewpoint of pigment dispersibility.

The polyalkyleneimine is preferably a polyalkyleneimine having an alkylene group having 2 or more and 5 or less carbon atoms, more preferably a polyalkyleneimine having an alkylene group having 2 or more and 4 or less carbon atoms, further preferably polyethyleneimine or polypropyleneimine, and particularly preferably polyethyleneimine. One or two or more of them may be used.

The number-average molecular weight of the polyalkyleneimine is preferably 150 or more, more preferably 500 or more, further preferably 800 or more, and further preferably 1,000 or more and preferably 10,000 or less, more preferably 5,000 or less, and further preferably 4,000 or less.

Examples of the polyallylamine include polymers having amino groups in the side chains, such as homopolymers or copolymers of allyl compounds such as allylamine and dimethylallylamine.

The weight-average molecular weight of the polyallylamine is preferably 800 or more, more preferably 1,000 or more, and further preferably 1,500 or more and preferably 10,000 or less, more preferably 5,000 or less, and further preferably 4,000 or less.

Examples of the (poly)ethylenepolyamine include ethylenediamine, diethylenetriamine, triethylenetetramine, tetraethylenepentamine, and pentaethylenehexamine. Among them, ethylenediamine, diethylenetriamine, triethylenetetramine, and tetraethylenepentamine are preferred, and ethylenediamine is particularly preferred.

The alkanolamine is preferably an alkanolamine having 2 or more and 9 or less carbon atoms. Examples of the alkanolamine include primary alkanolamines, such as monoethanolamine, monopropanolamine, and monobutanolamine; secondary alkanolamines including monoalkanol secondary amines, such as N-methylethanolamine and N-methylpropanolamine, and dialkanol secondary amines, such as diethanolamine and diisopropanolamine; and tertiary alkanolamines including monoalkanol tertiary amines, such as N,N-dimethylethanolamine, N,N-dimethylpropanolamine, and N,N-diethylethanolamine, dialkanol tertiary amines, such as N-methyldiethanolamine and N-ethyldiethanolamine, and trialkanol tertiary amines, such as triethanolamine and triisopropanolamine. Among them, tertiary alkanolamines having 2 or more and 9 or less carbon atoms are preferred, and triisopropanolamine is particularly preferred.

The alkylamine is preferably an alkylamine having 1 or more and 6 or less carbon atoms. Examples of the alkylamine include primary amines, such as propylamine, butylamine, and hexylamine; secondary amines, such as diethylamine and dipropylamine; and tertiary amines, such as triethylamine.

Examples of the polyol (a1-2) other than the polyol (a1-1) having an acid group include a polyether polyol (a1-21) and a polycarbonate polyol (a1-22).

Examples of the polyether polyol (a1-21) include those obtained by addition polymerization of an alkylene oxide using one or more compounds having two or more active hydrogen atoms as an initiator.

Examples of the initiator include ethylene glycol, diethylene glycol, triethylene glycol, propylene glycol, trimethylene glycol, 1,3-butanediol, 1,4-butanediol, 1,6-hexanediol, bisphenol A, glycerin, trimethylolethane, and trimethylolpropane.

Examples of the alkylene oxide include ethylene oxide, propylene oxide, butylene oxide, styrene oxide, epichlorohydrin, and tetrahydrofuran.

As the polyether polyol (a1-21), it is preferable to use a polyether polyol having a number-average molecular weight of 500 to 3,000, since such a polyether polyol has good compatibility with pigments or the like used in the ink.

As the polycarbonate polyol (a1-22), it is possible to use, for example, a product obtained by reacting a carbonate with a polyol or a product obtained by reacting phosgene with bisphenol A or the like.

As the carbonate, for example, methyl carbonate, dimethyl carbonate, ethyl carbonate, diethyl carbonate, cyclic carbonate, or diphenyl carbonate can be used.

Polyols that can be used as the polyol capable of reacting with the carbonate are, for example, dihydroxy compounds having relatively low molecular weights, such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcin, bisphenol A, bisphenol F, and 4,4'-biphenol; polyether polyols, such as polyethylene glycol, polypropylene glycol, and polytetramethylene glycol; and polyester polyols, such as polyhexamethylene adipate, polyhexamethylene succinate, and polycaprolactone.

As the polycarbonate polyol, the use of a product obtained by reacting the dimethyl carbonate with the 1,6-hexanediol is more preferable, because it can achieve both excellent adhesion to a plastic substrate and excellent substrate followability and is inexpensive.

As the polycarbonate polyol, it is preferable to use a polycarbonate polyol having a weight-average molecular weight of 500 to 3,000.

It is preferable to use the polycarbonate polyol within a range of 30 to 95 mass% of the total amount of the polyol and the polyisocyanate that are used for manufacturing the polyurethane (a1) for achieving adhesion to plastic substrates and both weather resistance and durability.

In addition, as the polyol (a1-2), a polyester polyol (a1-23) may be included.

The polyol (a1) may further include a polyol (a1-3) having an alicyclic structure.

Examples of the alicyclic structure include a cyclobutyl ring, a cyclopentyl ring, a cyclohexyl ring, a cycloheptyl ring, a cyclooctyl ring, a propylcyclohexyl ring, a tricyclo[5.2.1.0.2.6]decyl skeleton, a bicyclo[4.3.0]-nonyl skeleton, a tricyclo[5.3.1.1]dodecyl skeleton, a propyltricyclo[5.3.1.1]dodecyl skeleton, a norbornene skeleton, an isobornyl skeleton, a dicyclopentanyl skeleton, and an adamantyl skeleton. Among them, a cyclohexyl ring structure is preferable.

Examples of the polyol (a1-3) having an alicyclic structure include alicyclic structure-containing polyols having a low molecular weight of about 100 to 500, such as cyclobutanediol, cyclopentanediol, 1,4-cyclohexanediol, cycloheptanediol, cyclooctanediol, cyclohexanedimethanol, hydroxypropylcyclohexanol, dicyclohexanediol, butylcyclohexanediol, 1,1'-bicyclohexylidenediol, cyclohexanetriol, hydrogenated bisphenol A, and 1,3-adamantanediol. These polyols having an alicyclic structure can be used alone or in combination of two or more.

The use of the polyol (a1-3) having an alicyclic structure within a range of 0 to 20 mass% of the total amount of the polyol (a1) is preferable, because it can suppress blocking of the printed matters printed on plastic substrates.

### - Polyisocyanate (a2)

The polyisocyanate (a2) in the present invention includes a polyisocyanate (a2-1) having an alicyclic structure.

Examples of the alicyclic structure include a cyclobutyl ring, a cyclopentyl ring, a cyclohexyl ring, a cycloheptyl ring, a cyclooctyl ring, a propylcyclohexyl ring, a tricyclo[5.2.1.0.2.6]decyl skeleton, a bicyclo[4.3.0]-nonyl skeleton, a tricyclo[5.3.1.1]dodecyl skeleton, a propyltricyclo[5.3.1.1]dodecyl skeleton, a norbornene skeleton, an isobornyl skeleton, a dicyclopentanyl skeleton, and an adamantyl skeleton. Among them, a cyclohexyl ring structure is preferable.

Examples of the polyisocyanate (a2-1) having an alicyclic structure include cyclohexane diisocyanate, hydrogenated xylylene diisocyanate, isophorone diisocyanate, and dicyclohexylmethane diisocyanate. These polyisocyanates (a2-1) can be used alone or in combination of two or more.

The polyisocyanate (a2) may include an isocyanate compound (a2-2) other than the polyisocyanate (a2-1) having an alicyclic structure.

The isocyanate compound (a2-2) other than the (a2-1) can also be used in combination with a polyol not having an alicyclic structure, for example, an aromatic polyisocyanate, such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, toluene diisocyanate, naphthalene diisocyanate, xylylene diisocyanate, and tetramethylxylylene diisocyanate; or an aliphatic polyisocyanate, such as hexamethylene diisocyanate and lysine diisocyanate.

Examples of the method for manufacturing the urethane resin (A) obtained by reacting a polyol (a1) with a polyisocyanate (a2) include a method in which the polyol (a1) and the polyisocyanate (a2) are mixed in the absence of a solvent or in the presence of an organic solvent and are reacted within a reaction temperature range of about 50°C to 150°C.

The reaction of a polyol (a1) with a polyisocyanate (a2) is, for example, performed at an equivalent rate of the isocyanate group of the polyisocyanate (a2) to the hydroxyl group of the polyol (a1) within a range of preferably 0.8 to 2.5 and more preferably 0.9 to 1.5.

The urethane resin (A) of the present invention necessarily has an alicyclic structure derived from the polyisocyanate (a2-1) having an alicyclic structure in the resin structure. When the polyol (a1) includes a polyol (a1-3) having an alicyclic structure, the alicyclic structure derived from the (a1-3) also forms the urethane resin (A). The urethane resin (A) having an alicyclic structure improves the adhesion to plastic substrates and can suppress blocking of printed matters, and the characteristics as an aqueous ink-jet ink for plastic substrates are therefore improved.

The alicyclic structure is present within a range of 500 to 5,000 mmol/kg with respect to the whole urethane resin (A), preferably 600 to 4,000 mmol/kg and further preferably 800 to 3,500 mmol/kg. However, when the polyol (a1) does not include a polycarbonate polyol (a1-22), the rate of the alicyclic structure is 1,000 mmol/kg or more with respect to the whole urethane resin (A), preferably 1,000 to 4,000 mmol/kg and further preferably 1,000 to 3,500 mmol/kg. In the range above, the adhesion to plastic substrates is further improved, and blocking of printed matters can be further suppressed.

Incidentally, in the present invention, the rate of an alicyclic structure included in the urethane resin (A) with respect to the whole urethane resin (A) is a theoretical value calculated based on the total mass of all raw materials such as the polyol (a1) and the polyisocyanate (a2) used in manufacturing of the urethane resin (A) and the substance amount of the alicyclic structure possessed by the alicyclic structure-containing compound used in manufacturing of the urethane resin (A).

In addition, when the urethane resin (A) is manufactured, a chain extender can be used as needed.

Examples of the chain extender include polyamines, hydrazine compounds, and other compounds having active hydrogen atoms. These chain extenders can be used alone or in combination of two or more.

When the polyol (a1) includes a polycarbonate polyol (a1-22), the urethane resin (A) is not chain-extended or is polyamine-extended, and a urethane resin chain-extended by a hydrazine compound or the like other than polyamine cannot be used.

In contrast, when the polyol (a1) does not include a polycarbonate polyol (a1-22), the urethane resin (A) is preferably hydrazine-extended. The urethane resin (A) (not including a polycarbonate polyol (a1-22) as the raw material) obtained by hydrazine extension using a hydrazine compound is particularly preferable, because it improves adhesion to plastic substrates.

Examples of the polyamine include diamines, such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; and N-hydroxymethylaminoethylamine, N-hydroxyethylaminoethylamine, N-hydroxypropylaminopropylamine, N-ethylaminoethylamine, N-methylaminopropylamine, diethylenetriamine, dipropylenetriamine, and triethylenetetramine. Among them, ethylenediamine is preferable.

Examples of the hydrazine compound include hydrazine, N,N'-dimethylhydrazine, 1,6-hexamethylenebishydrazine, succinic acid dihydrazide, adipic acid dihydrazide, glutamic acid dihydrazide, sebacic acid dihydrazide, isophthalic acid dihydrazide, β-semicarbazide propionic acid hydrazide, 3-semicarbazide-propyl-carbazate, and semicarbazide-3-semicarbazide methyl-3,5,5-trimethylcyclohexane. Among them, hydrazine is preferable.

Examples of the other compounds having active hydrogen include glycols, such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; phenols, such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water.

When a polyamine is used as the chain extender, the equivalent ratio of the amino group and the isocyanate group possessed by the polyamine, [amino group/isocyanate group], is preferably 1.2 or less and more preferably within a range of 0.3 to 1.

Examples of the organic solvent that can be used when the urethane resin (A) is manufactured include ketone solvents, such as acetone and methyl ethyl ketone; ether solvents, such as tetrahydrofuran and dioxane; acetate solvents, such as ethyl acetate and butyl acetate; nitrile solvents, such as acetonitrile; and amide solvents, such as dimethylformamide and N-methylpyrrolidone. These organic solvents can be used alone or in combination of two or more.

The organic solvent may be partially or wholly removed by, for example, vacuum distillation during or after manufacturing of the urethane resin (A) in order to reduce the loads on safety and environment.

It is preferable to use the urethane resin (A) obtained by the method above preferably having a mass-average molecular weight within a range of 5,000 to 500,000, more preferably a mass-average molecular weight within a range of 5,000 to 200,000, and further preferably a mass-average molecular weight within a range of 20,000 to 100,000, because such a urethane resin (A) can express durability of printed matters.

Incidentally, the measurement of the weight-average molecular weight (in terms of polystyrene) by GPC (gel permeation chromatography) in the present invention was performed using HLC-8220 System manufactured by TOSOH Corporation under the following conditions:
Separation column: four columns of TSK-gel GMHHR-N manufactured by TOSOH Corporation;
Column temperature: 40°C;
Moving bed: tetrahydrofuran manufactured by FUJIFILM Wako Pure Chemical Corporation;
Flow rate: 1.0 mL/min;
Sample concentration: 0.4 mass%;
Sample injection volume: 100 µL; and
Detector: differential refractometer.

When the mass average molecular weight is 5,000 or more, not only the durability of printed matters is improved, but also various problems such as blocking due to poor drying tend to hardly occur, and when the molecular weight is 500,000 or less, problems such as a reduction in ink discharge properties tend to hardly occur. Thus, such molecular weights are preferable.

### (Aqueous medium (B))

Examples of the aqueous medium (B) in the present invention include water, organic solvents mixable with water, and mixtures thereof. Examples of the organic solvent mixable with water include alcohol solvents, such as methanol, ethanol, n-propanol, and isopropanol; ketone solvents, such as acetone and methyl ethyl ketone; polyalkylene glycols, such as ethylene glycol, diethylene glycol, and propylene glycol; alkyl ethers of polyalkylene glycols; and lactam solvents, such as N-methyl-2-pyrrolidone. In the present invention, only water may be used, a mixture of water and an organic solvent mixable with water may be used, or only an organic solvent mixable with water may be used.

The aqueous medium (B) is preferably water alone or a mixture of water and an organic solvent mixable with water and particularly preferably water alone, from the point of loads on safety and environment.

The binder of the present invention is obtained by mixing a urethane resin (A) with an aqueous medium (B), and in order to more suitably mix, the urethane resin (A) is preferably made aqueous. The urethane resin (A) can be made aqueous by, for example, the following methods:
[Method 1] The acid groups of aqueous urethane resin obtained by reacting a polyol (a1) with a polyisocyanate (a2) are partially or wholly neutralized, an aqueous medium (B) is then charged thereto for water dispersion, and subsequently chain extension is performed using the chain extender to disperse the urethane resin (A) in water;
[Method 2] The aqueous urethane resin obtained by reacting a polyol (a1) with a polyisocyanate (a2) and the same chain extender as above are charged in a batch or separately in a reaction vessel for chain-extension reaction to manufacture a urethane resin (A), the acid groups in the obtained urethane resin (A) are then partially or wholly neutralized, and an aqueous medium (B) is then charged thereto for water dispersion.

In the [Method 1] and the [Method 2], an emulsifier may be used as needed. In water dissolution or water dispersion, a machine such as a homogenizer may be used as needed.

Examples of the emulsifier include nonionic emulsifiers, such as polyoxyethylene nonylphenyl ether, polyoxyethylene lauryl ether, polyoxyethylene styrylphenyl ether, polyoxyethylene sorbitol tetraoleate, and polyoxyethylene-polyoxypropylene copolymers; anionic emulsifiers, such as fatty acid salts, e.g., sodium oleate, alkylsulfates, alkylbenzenesulfonates, alkylsulfosuccinates, naphthalenesulfonates, polyoxyethylene alkylsulfates, alkane sulfonate sodium salts, and alkyldiphenyl ether sulfonate sodium salts; and cationic emulsifiers, such as alkylamine salts, alkyltrimethylammonium salts, and alkyldimethylbenzylammonium salts. Among them, an anionic or nonionic emulsifier is preferable from the viewpoint of maintaining excellent storage stability of an aqueous pigment dispersion for preparing an aqueous ink-jet ink of the present invention and an aqueous ink-jet ink using the aqueous pigment dispersion.

The binder of the present invention in which a urethane resin (A) obtained by the method above is dispersed in an aqueous medium (B) is adjusted to contain the urethane resin (A) within a range of 10 to 50 mass% of the total amount of the binder and to contain the urethane resin (A) within a range of 20 to 75 mass% with respect to the total amount of the solid content of the aqueous pigment dispersion, which is preferable in improvement of the ink resolubility at the ink-jet head portion during ink-jet printing of the ink-jet ink using the aqueous pigment dispersion, the suppression of blocking printed matters, and adhesion to plastic substrates.

### <Pigment>

The pigment in the present invention is present in the aqueous pigment dispersion of the present invention in a state of being dispersed at an average particle diameter of 50 to 400 nm. The type of the pigment is not particularly limited as long as it can be dispersed at the average particle diameter above, and, for example, an organic pigment, an inorganic pigment, and a dye that are generally used in ink, paint, and recording materials can be used.

Examples of the organic pigment include pigments, such as azo-based, phthalocyanine-based, anthraquinone-based, perylene-based, perinone-based, quinacridone-based, thioindigo-based, dioxazine-based, isoindolinone-based, quinophthalone-based, azomethineazo-based, diketopyrrolopyrrole-based, and isoindoline-based pigments. In indigo blue ink, copper phthalocyanine is preferably used from the point of cost and light resistance.

Examples of the inorganic pigment include carbon black, titanium oxide, zinc oxide, zinc sulfide, barium sulfate, calcium carbonate, chromium oxide, silica, red oxide, and mica (isinglass). In addition, bright pigment (METASHINE; Nippon Sheet Glass Co., Ltd.) in which a metal or metal oxide is coated on the base material of glass flakes or massive flakes can be used. It is preferable from the point of cost and tinting strength to use titanium oxide for a white ink, carbon black for a black ink, and mica for pearl ink for gold and silver inks.

### <Aqueous medium>

The aqueous pigment dispersion of the present invention further contains an aqueous medium for adjusting the viscosity to a level suitable for pump transportation of the aqueous pigment dispersion or filter filtration of the aqueous pigment dispersion.

The aqueous medium may be the same as or different from the aqueous medium (B) to be used in the binder described above.

Examples of the aqueous medium include water, organic solvents mixable with water, and mixtures thereof. Examples of the organic solvent mixable with water include alcohol solvents, such as methanol, ethanol, n-propanol, and isopropanol; ketone solvents, such as acetone and methyl ethyl ketone; polyalkylene glycols, such as ethylene glycol, diethylene glycol, and propylene glycol; alkyl ethers of polyalkylene glycols; and lactam solvents, such as N-methyl-2-pyrrolidone. In the present invention, only water may be used, a mixture of water and an organic solvent mixable with water may be used, or only an organic solvent mixable with water may be used.

### <Aqueous pigment dispersion for preparing aqueous ink-jet ink>

The aqueous pigment dispersion for preparing an aqueous ink-jet ink of the present invention is manufactured as an intermediate product for an aqueous ink-jet ink and is used as an aqueous ink-jet ink after dilution.

In the aqueous pigment dispersion, the pigment is required to be dispersed at a volume-average particle diameter of 50 to 400 nm. As the average particle diameter of the pigment, the volume-average particle diameter can be measured by a known method, such as a dynamic light scattering method, after production of an aqueous pigment dispersion in a state that the pigment is evenly dispersed in the dispersion. In the dispersion, the pigment preferably has a volume-average particle diameter of 50 to 300 nm, more preferably 50 to 200 nm, further preferably 50 to 150 nm, and particularly preferably 50 nm or more and less than 100 nm. When the volume-average particle diameter is 50 nm or more, aggregation of the pigment during storage can be suppressed. When the volume-average particle diameter is 400 nm or less (particularly preferably 100 nm or less), the ink discharge properties are improved.

The content of the pigment in the aqueous pigment dispersion is not particularly limited, but is preferably 10 to 30 mass% of the total amount of the dispersion. When the content is less than 10 mass%, there is a risk that the aqueous ink-jet ink prepared by diluting the aqueous pigment dispersion cannot obtain sufficient ink tinting strength. When the content is higher than 30 mass%, there is a risk of aggregation of the pigment during transportation or storage depending on the type of the pigment, and in such a case, the dispersibility at an average particle diameter of 50 to 400 nm cannot be guaranteed. In addition, there is a concern that the ink discharge properties deteriorate depending on the degree of dilution.

As a preferable pigment concentration, in the case of an organic pigment or carbon black, 15 to 25 mass% is particularly preferable. In such a range, suitable ink tinting strength and ink discharge properties can be simultaneously achieved in an aqueous ink-jet ink prepared by dilution. In the case of an organic pigment and inorganic pigment other than carbon black, 20 to 50 mass% is preferable, and 25 to 45 mass% is particularly preferable.

In the aqueous pigment dispersion of the present invention, the content of the binder is preferably 5 to 30 mass% of the total amount of the aqueous pigment dispersion. This range is preferable, because the adhesion to plastic substrates and blocking resistance of the aqueous ink-jet ink are simultaneously achieved, even after dilution. The content of the binder when an organic pigment or carbon black is used as the pigment is particularly preferably 15 to 25 mass%. When an organic pigment and an inorganic pigment other than carbon black is used as the pigment, the content is particularly preferably 7 to 20 mass%.

### (Other compounds)

In the aqueous pigment dispersion of the present invention, in addition to the pigment, binder, and aqueous medium, other components may be blended.

Examples of the other components include a pigment dispersant, a surfactant, a low-surface-tension organic solvent, a humectant, a penetrant, a dispersant, a defoaming agent, an antiseptic, a viscosity adjuster, a pH adjuster, a chelating agent, a plasticizer, an antioxidant, and a UV absorber.

The pigment dispersant may be an aqueous resin suitable for preparing a pigment dispersion, and preferable examples thereof include polyvinyl alcohols; polyvinyl pyrrolidones; acrylic resins, such as an acrylic acid-acrylate copolymer; styrene-acrylic resins, such as a styrene-acrylic acid copolymer, a styrene-methacrylic acid copolymer, a styrene-methacrylic acid-acrylate copolymer, a styrene-α-methylstyrene-acrylic acid copolymer, and a styrene-α-methylstyrene-acrylic acid-acrylate copolymer; a styrene-maleic acid copolymer; a styrene-maleic anhydride copolymer; a vinylnaphthalene-acrylic acid copolymer, and salts of these aqueous resins.

Examples of the compound for forming a salt of an aqueous resin (copolymer) in the pigment dispersion include alkali metal hydroxides, such as sodium hydroxide, potassium hydroxide, and lithium hydroxide; and diethylamine, ammonia, ethylamine, triethylamine, propylamine, isopropylamine, dipropylamine, butylamine, isobutylamine, triethanolamine, diethanolamine, aminomethyl propanol, and morpholine. The amount of the compound used for forming these salts is preferably the neutralization equivalent or more of the copolymer.

As the pigment dispersant, a commercial product can also be used needless to say. As the commercial product, for example, AJISPER PB series manufactured by Ajinomoto Fine-Techno Co., Ltd., DISPERBYK series and BYK-series of BYK-Chemie Japan K.K., and EFKA series manufactured by Ciba Specialty Chemicals can be used.

Examples of the surfactant include anionic surfactants, nonionic surfactants, cationic surfactants, and amphoteric surfactants, and among them, anionic surfactants and nonionic surfactants are preferable.

Examples of the anionic surfactant include alkylbenzenesulfonates, alkylphenylsulfonates, alkylnaphthalenesulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates, and specific examples thereof include dodecylbenzenesulfonate, isopropylnaphthalenesulfonate, monobutylphenylphenolmonosulfonate, monobutylbiphenylsulfonate, and dibutylphenylphenoldisulfonate.

Examples of the nonionic surfactant include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, polyethylene glycol polypropylene glycol block copolymers, and alkylphenol ethoxylates, and among them, polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, polyethylene glycol polypropylene glycol block copolymers, and alkylphenol ethoxylates are preferable.

As other surfactants, for example, silicon surfactants, such as a polysiloxane oxyethylene adduct; fluorine-based surfactants, such as a perfluoroalkylcarboxylate, a perfluoroalkylsulfonate, and an oxyethylene perfluoroalkyl ether; and biosurfactants, such as spiculisporic acid, rhamnolipid, and lysolecithin, can also be used.

These surfactants can be used alone or as a mixture of two or more. Considering the dissolution stability of a surfactant, the HLB is preferably within a range of 7 to 20.

Examples of commercially available fluorine-based surfactant include Novec FC-4430 and FC-4432 (they are manufactured by Sumitomo 3M Limited), Zonyl FSO-100, FSN-100, FS-300, and FSO (manufactured by DuPont de Nemours, Inc.), EFTOP EF-122A, EF-351, 352801, and 802 (manufactured by GEMCO), MEGAFAC F-470, F-1405, F474, and F-444 (manufactured by DIC Corporation), Surflon S-111, S-112, S-113, S121, S131, S132, S-141, and S-145 (manufactured by AGC Inc.), Ftergent series (manufactured by NEOS Co., Ltd.), Fluorad FC series (manufactured by Minnesota Mining and Manufacturing Company), Monflor (manufactured by Imperial Chemical Industries Ltd.), and Licowet VPF series (manufactured by Farbwerke Hoechst AG) .

Examples of the silicon surfactant include KF-351A, KF-642, OLFINE PD-501, OLFINE PD-502, and OLFINE PD-570 (manufactured by Shin-Etsu Chemical Co., Ltd.), and BYK 347 and BYK 348 (manufactured by BYK-Chemie Japan K.K.).

Examples of the polyoxyethylene alkyl ether surfactant include BT series (Nikko Chemicals Co., Ltd.), NONIPOL series (Sanyo Chemical Industries, Ltd.), D- and P-series (Takemoto Oil & Fat Co., Ltd.), EMALEX DAPE series (Nihon Emulsion Co., Ltd.), and PEGNOL series (TOHO Chemical Industry Co., Ltd.). Examples of the polyethylene glycol alkyl ester-based surfactant include PEGNOL (TOHO Chemical Industry Co., Ltd.).

Examples of the acetylene glycol surfactant include OLFINE E1010, STG, and Y (manufactured by Nissin Chemical Industry Co., Ltd.) and SURFYNOL 104, 82, 420, 440, 465, 485, and TG (manufactured by Air Products and Chemicals Inc.).

Examples of the low-surface-tension organic solvent include glycol ether compounds, such as diethylene glycol mono(alkyl having 1 to 8 carbon atoms) ether, triethylene glycol mono(alkyl having 1 to 8 carbon atoms) ether, propylene glycol mono(alkyl having 1 to 6 carbon atoms) ether, and dipropylene glycol mono(alkyl having 1 to 6 carbon atoms) ether, and these can be used alone or as a mixture of two or more.

Specifically, the examples include ethylene glycol monomethyl ether, ethylene glycol monoethyl ether, ethylene glycol mono-iso-propyl ether, ethylene glycol monobutyl ether, ethylene glycol mono-t-butyl ether, diethylene glycol monomethyl ether, diethylene glycol monoethyl ether, diethylene glycol monopropyl ether, diethylene glycol mono-iso-propyl ether, diethylene glycol monobutyl ether, diethylene glycol mono-t-butyl ether, diethylene glycol monopentyl ether, diethylene glycol monohexyl ether, diethylene glycol monoheptyl ether, diethylene glycol monooctyl ether, triethylene glycol monomethyl ether, triethylene glycol monoethyl ether, triethylene glycol monopropyl ether, triethylene glycol monobutyl ether, triethylene glycol monopentyl ether, triethylene glycol monohexyl ether, triethylene glycol monoheptyl ether, triethylene glycol monooctyl ether, propylene glycol monomethyl ether, propylene glycol monoethyl ether, propylene glycol monopropyl ether, propylene glycol mono-iso-propyl ether, propylene glycol monobutyl ether, propylene glycol mono-t-butyl ether, propylene glycol monopentyl ether, propylene glycol monohexyl ether, dipropylene glycol monomethyl ether, dipropylene glycol monoethyl ether, dipropylene glycol monopropyl ether, dipropylene glycol mono-iso-propyl ether, dipropylene glycol monobutyl ether, dipropylene glycol monopentyl ether, and dipropylene glycol monohexyl ether.

The glycol ether, surfactant, and so on can be used for adjusting the surface tension of the ink. Specifically, they can be appropriately added such that the surface tension of the ink is from 15 mN/m to 30 mN/m or less, and the amount of the surfactant to be added is preferably within a range of about 0.1 to 10 mass% with respect to the aqueous pigment dispersion, more preferably 0.3 to 2 mass%. The surface tension is preferably within a range of 16 to 28 and most preferably within a range of 18 to 25.

The humectant is not particularly limited, but is preferably one that has miscibility with water to provide an effect of preventing clogging of the head of an ink-jet printer. Examples thereof include glycerin, ethylene glycol, diethylene glycol, triethylene glycol, polyethylene glycol having a molecular weight of 2,000 or less, propylene glycol, dipropylene glycol, tripropylene glycol, 1,3-propylene glycol, isopropylene glycol, isobutylene glycol, diol compounds such as 1,2-butanediol, 1,4-butanediol, 1,2-pentanediol, 1,5-pentanediol, 1,2-hexanediol, 1,6-hexanediol, 2-methylpentane-2,4-diol, 1,2-heptanediol, 1,2-nonanediol, 1,2-octanediol, 1,2-hexanediol, 1,2-heptanediol, 1,2-nonanediol, and 1,2-octanediol, 1,4-butanediol, 1,3-butanediol, mesoerythritol, pentaerythritol, and nitrogen-containing heterocyclic compounds such as N-methyl-2-pyrrolidone, N-hydroxyethyl-2-pyrrolidone, 2-pyrrolidone, 1,3-dimethylimidazolidinone, and ε-caprolactam. In particular, when propylene glycol or 1,3-butylglycol is contained, safety is obtained, and excellent effects are observed in ink drying property and discharge performance.

The content of the humectant in an ink is preferably 3 to 50 mass%.

Examples of the penetrant include lower alcohols, such as ethanol and isopropyl alcohol; ethylene oxide adducts of alkyl alcohols, such as ethylene glycol hexyl ether and diethylene glycol butyl ether; and propylene oxide adducts of alkyl alcohols, such as propylene glycol propyl ether. The content of the penetrant in the aqueous pigment dispersion is preferably 0.01 to 10 mass%.

### <Method for manufacturing aqueous pigment dispersion>

The method for manufacturing an aqueous pigment dispersion for preparing an aqueous ink-jet ink in the present invention is not limited at all. A pigment, a binder, and an aqueous medium and additives, such as a surfactant, as needed may be dispersed to form an aqueous pigment dispersion. Alternatively, a pigment dispersion mill base solution with a high pigment concentration is produced in advance from a pigment, an aqueous medium, a surfactant, and so on excluding a binder, the binder and additives are then appropriately added thereto, and the resulting solution may be diluted with an aqueous medium to obtain an aqueous pigment dispersion for preparing an aqueous ink-jet ink. An aqueous pigment dispersion in which a pigment is dispersed at a desired volume-average particle diameter can be easily obtained by producing a pigment dispersion mill base solution by dispersing the pigment using a stirring and dispersing device in advance and then producing an aqueous pigment dispersion.

A method in which the latter pigment dispersion mill base solution is produced and is then made to an aqueous pigment dispersion for preparing an aqueous ink-jet ink will now be described.

Examples of the method for manufacturing the pigment dispersion mill base solution include the methods as follows:
(1) A method in which a pigment is added to an aqueous medium containing a pigment dispersant as needed and the pigment is then dispersed in the aqueous medium using a stirring and dispersing device to prepare a pigment dispersion mill base solution;
(2) A method in which a pigment and a pigment dispersant as needed are kneaded using a kneader such as a two-roll mill or a mixer and the obtained kneaded product is added to an aqueous medium to prepare a pigment dispersion mill base solution using a stirring and dispersing device; and
(3) A method in which a pigment is added to a solution obtained by dissolving a pigment dispersant in an organic solvent having compatibility with water, such as methyl ethyl ketone or tetrahydrofuran, and is then dispersed in the organic solution using a stirring and dispersing device, subsequently phase-transfer emulsification is performed using an aqueous medium, and the organic solvent is then distilled away to prepare a pigment dispersion mill base solution.

Examples of the stirring and dispersing device include an ultrasonic homogenizer, a high-pressure homogenizer, a paint shaker, a ball mill, a roll mill, a sand mill, a sand grinder, DYNO-MILL, DISPERMAT, SC-MILL, and NANOMIZER, and one of these devices may be used alone or in combination of two or more.

### <Aqueous ink-jet ink>

The aqueous pigment dispersion of the present invention is diluted with an aqueous medium such that the content of the pigment is 1 to 30 mass% to obtain an aqueous ink-jet ink. This aqueous medium may be the same as the above-described aqueous medium (B) or may be another aqueous medium. This aqueous medium may be the same aqueous medium contained in the aqueous pigment dispersion together with a binder and a pigment or may be another aqueous medium.

### <Printed matter>

Since the aqueous ink-jet ink using the aqueous pigment dispersion of the present invention has excellent adhesion to plastic substrates, it is possible to suitably manufacture a printed matter having a plastic substrate and a printed layer of the aqueous ink-jet ink using the aqueous pigment dispersion of the present invention.

Examples of the plastic substrate include plastic substrates made of a polyamide resin, such as Ny6, Nylon 66, and Nylon 46; a polyester resin, such as polyethylene terephthalate, polyethylene naphthalate, polytrimethylene terephthalate, polytrimethylene naphthalate, polybutylene terephthalate, and polybutylene naphthalate; a polyhydroxycarboxylic acid, such as polylactic acid; a biodegradable resin represented by an aliphatic polyester resin, such as poly(ethylene succinate) and poly(butylene succinate); a polyolefin resin, such as polypropylene and polyethylene; or a thermoplastic resin, such as a polyimide resin, a polyarylate resin, or a mixture thereof, and laminates of these substrates. In particular, a substrate made of polyester, polyamide, polyethylene, or polypropylene can be suitably used.

The plastic substrate may be a plastic film. The plastic film may be an unstretched film or a stretched film, and the manufacturing method thereof is also not limited. The thickness of the film is also not particularly limited, and may be usually within a range of 1 to 500 um.

The printing surface of a film is preferably treated with corona discharge. Silica, alumina, or the like may be vapor-deposited on the printing surface.

The printed matter of the present invention has good adhesion to the plastic substrate and can be produced by ink-jet printing and can be therefore suitably used as a packaging material. The printed matter is particularly excellent in designability and on-demand printing and can be therefore used particularly suitably for food packaging.

### EXAMPLES

The present invention will now be specifically described by Examples and Comparative Examples. Hereinafter, "part(s)" means "part(s) by mass" and "%" means "mass%" unless otherwise specified.

### <Examples 1 to 8 and Comparative Examples 1 to 4>

### (Synthesis Example 1: Preparation of binder (1) for aqueous ink-jet ink)

In a nitrogen-purged vessel equipped with a thermometer, a nitrogen gas introduction pipe, and a stirrer, 191 parts by mass of polyoxytetramethylene glycol (molecular weight: 2,000), 141 parts by mass of isophorone diisocyanate, and 26 parts by mass of 2,2-dimethylolpropionic acid were reacted in a solvent mixture of 28 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 20 parts by mass of a 50% potassium hydroxide aqueous solution, and 700 parts by mass of water and 9.0 parts by mass of an 80% hydrazine aqueous solution were further added thereto, followed by sufficient stirring to obtain a urethane resin water dispersion. Subsequently, aging and desolventizing were performed to obtain a binder (1) for aqueous ink-jet ink containing 40 mass% of a nonvolatile content.

In this binder (1) for aqueous ink-jet ink, the rate of the alicyclic structure in the urethane resin was 2,067 mmol/kg, and the acid value was 28.

### (Synthesis Example 2: Preparation of binder (2) for aqueous ink-jet ink)

In a nitrogen-purged vessel equipped with a thermometer, a nitrogen gas introduction pipe, and a stirrer, 256 parts by mass of polyoxytetramethylene glycol (molecular weight: 2,000), 102 parts by mass of isophorone diisocyanate, and 23 parts by mass of 2,2-dimethylolpropionic acid were reacted in a solvent mixture of 6.5 parts by mass of neopentyl glycol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 18 parts by mass of a 50% potassium hydroxide aqueous solution, and 700 parts by mass of water and 6.5 parts by mass of an 80% hydrazine aqueous solution were further added thereto, followed by sufficient stirring to obtain a urethane resin water dispersion. Subsequently, aging and desolventizing were performed to obtain a binder (2) for aqueous ink-jet ink containing 40 mass% of a nonvolatile content.

In this binder (2) for aqueous ink-jet ink, the rate of the alicyclic structure in the urethane resin was 1,150 mmol/kg, and the acid value was 25.

### (Synthesis Example 3: Preparation of binder (3) for aqueous ink-jet ink)

In a nitrogen-purged vessel equipped with a thermometer, a nitrogen gas introduction pipe, and a stirrer, 263 parts by mass of polyoxytetramethylene glycol (molecular weight: 2,000), 98 parts by mass of isophorone diisocyanate, and 22 parts by mass of 2,2-dimethylolpropionic acid were reacted in a solvent mixture of 5.6 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 17 parts by mass of a 50% potassium hydroxide aqueous solution, and 700 parts by mass of water and 6.2 parts by mass of an 80% hydrazine aqueous solution were further added thereto, followed by sufficient stirring to obtain a urethane resin water dispersion. Subsequently, aging and desolventizing were performed to obtain a binder (3) for aqueous ink-jet ink containing 40 mass% of a nonvolatile content.

In this binder (3) for aqueous ink-jet ink, the rate of the alicyclic structure in the urethane resin was 1,198 mmol/kg, and the acid value was 23.

### (Synthesis Example 4: Preparation of binder (4) for aqueous ink-jet ink)

In a nitrogen-purged vessel equipped with a thermometer, a nitrogen gas introduction pipe, and a stirrer, 250 parts by mass of polyoxytetramethylene glycol (molecular weight: 2,000), 109 parts by mass of isophorone diisocyanate, and 8.6 parts by mass of 2,2-dimethylolpropionic acid were reacted in a solvent mixture of 26 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 6.8 parts by mass of a 50% potassium hydroxide aqueous solution, and 700 parts by mass of water and 6.9 parts by mass of an 80% hydrazine aqueous solution were further added thereto, followed by sufficient stirring to obtain a urethane resin water dispersion. Subsequently, aging and desolventizing were performed to obtain a binder (4) for aqueous ink-jet ink containing 40 mass% of a nonvolatile content.

In this binder (4) for aqueous ink-jet ink, the rate of the alicyclic structure in the urethane resin was 1,671 mmol/kg, and the acid value was 9.

### (Synthesis Example 5: Preparation of binder (5) for aqueous ink-jet ink)

In a nitrogen-purged vessel equipped with a thermometer, a nitrogen gas introduction pipe, and a stirrer, 113 parts by mass of polyoxytetramethylene glycol (molecular weight: 2,000), 178 parts by mass of isophorone diisocyanate, and 17 parts by mass of 2,2-dimethylolpropionic acid were reacted in a solvent mixture of 84 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 13 parts by mass of a 50% potassium hydroxide aqueous solution, and 700 parts by mass of water and 2.2 parts by mass of an 80% hydrazine aqueous solution were further added thereto, followed by sufficient stirring to obtain a urethane resin water dispersion. Subsequently, aging and desolventizing were performed to obtain a binder (5) for aqueous ink-jet ink containing 40 mass% of a nonvolatile content.

In this binder (5) for aqueous ink-jet ink, the rate of the alicyclic structure in the urethane resin was 3,459 mmol/kg, and the acid value was 18.

### (Comparative Synthesis Example 1: Preparation of binder (6) for aqueous ink-jet ink)

In a nitrogen-purged vessel equipped with a thermometer, a nitrogen gas introduction pipe, and a stirrer, 196 parts by mass of polyoxytetramethylene glycol (molecular weight: 2,000), 145 parts by mass of isophorone diisocyanate, and 26 parts by mass of 2,2-dimethylolpropionic acid were reacted in a solvent mixture of 28 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 19 parts by mass of triethylamine, and 700 parts by mass of water and 9.2 parts by mass of an 80% hydrazine aqueous solution were further added thereto, followed by sufficient stirring to obtain a urethane resin water dispersion. Subsequently, aging and desolventizing were performed to obtain a binder (6) for aqueous ink-jet ink containing 40 mass% of a nonvolatile content.

In this binder (6) for aqueous ink-jet ink, the rate of the alicyclic structure in the urethane resin was 2,120 mmol/kg, and the acid value was 28.

### (Comparative Synthesis Example 2: Preparation of binder (7) for aqueous ink-jet ink)

In a nitrogen-purged vessel equipped with a thermometer, a nitrogen gas introduction pipe, and a stirrer, 291 parts by mass of polyoxytetramethylene glycol (molecular weight: 2,000), 80 parts by mass of isophorone diisocyanate, and 16 parts by mass of 2,2-dimethylolpropionic acid were reacted in a solvent mixture of 4.9 parts by mass of neopentyl glycol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 13 parts by mass of a 50% potassium hydroxide aqueous solution, and 700 parts by mass of water and 3.4 parts by mass of an 80% hydrazine aqueous solution were further added thereto, followed by sufficient stirring to obtain a urethane resin water dispersion. Subsequently, aging and desolventizing were performed to obtain a binder (7) for aqueous ink-jet ink containing 40 mass% of a nonvolatile content.

In this binder (7) for aqueous ink-jet ink, the rate of the alicyclic structure in the urethane resin was 901 mmol/kg, and the acid value was 17.

### (Comparative Synthesis Example 3: Preparation of binder (8) for aqueous ink-jet ink)

In a nitrogen-purged vessel equipped with a thermometer, a nitrogen gas introduction pipe, and a stirrer, 196 parts by mass of polyoxytetramethylene glycol (molecular weight: 2,000), 145 parts by mass of isophorone diisocyanate, and 26 parts by mass of 2,2-dimethylolpropionic acid were reacted in a solvent mixture of 28 parts by mass of 1,4-cyclohexanedimethanol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 13 parts by mass of a 25% ammonia aqueous solution, and 700 parts by mass of water and 9.2 parts by mass of an 80% hydrazine aqueous solution were further added thereto, followed by sufficient stirring to obtain a urethane resin water dispersion. Subsequently, aging and desolventizing were performed to obtain a binder (8) for aqueous ink-jet ink containing 40 mass% of a nonvolatile content.

In this binder (8) for aqueous ink-jet ink, the rate of the alicyclic structure in the urethane resin was 2,120 mmol/kg, and the acid value was 28.

### [Production of aqueous pigment dispersion for preparing aqueous ink-jet ink]

The binders for aqueous ink-jet ink obtained in Synthesis Examples 1 to 5 and Comparative Synthesis Examples 1 to 3 were each thoroughly stirred and mixed with the following pigment dispersion mill base and an aqueous medium according to the following composition to produce each aqueous pigment dispersion for preparing an aqueous blue ink-jet ink.

### [Production of pigment dispersion mill base]

Indigo pigment base 1 (hereinafter, "Indigo 1") was thoroughly stirred and mixed according to the following composition and was then milled with a bead mill (the beads used were NIKKATO Corporation YTZ beads of 0.5 mmϕ, bead filling rate: 80%), the volume-average particle diameter of the pigment was measured with Nanotrac WAVE II (manufactured by MicrotracBEL Corp.), and a mill base having a volume-average particle diameter (MV) of 95 nm was produced.
FASTPGEN BLUE TGR-SD indigo pigment (manufactured by DIC Corporation): 40 parts
Nonionic pigment dispersant (manufactured by BYK): 10 parts
Water: 50 parts
Silicon defoaming agent (manufactured by BYK): 0.1 parts

Indigo pigment base 2 (hereinafter, "Indigo 2") was thoroughly stirred and mixed according to the following composition and was then milled with a bead mill (the beads used were NIKKATO Corporation YTZ beads of 0.5 mmϕ, bead filling rate: 80%), the volume-average particle diameter of the pigment was measured as above, and a mill base having a volume-average particle diameter of 110 nm was produced.
FASTPGEN BLUE PA5380 indigo pigment (manufactured by DIC Corporation): 40 parts
Nonionic pigment dispersant (manufactured by BYK): 10 parts
Water: 50 parts
Silicon defoaming agent (manufactured by BYK): 0.1 parts

Black pigment base 1 (hereinafter, "Black 1") was thoroughly stirred and mixed according to the following composition and was then milled with a bead mill (the beads used were NIKKATO Corporation YTZ beads of 0.5 mmϕ, bead filling rate: 80%), the volume-average particle diameter of the pigment was measured as above, and a mill base having a volume-average particle diameter of 120 nm was produced.
Carbon black MA100 black pigment (manufactured by Mitsubishi Chemical Corporation): 40 parts
Nonionic pigment dispersant (manufactured by BYK): 10 parts
Water: 50 parts
Silicon defoaming agent (manufactured by BYK): 0.1 parts

White pigment base 1 (hereinafter, "White 1") was thoroughly stirred and mixed according to the following composition and was then milled with a bead mill (the beads used were NIKKATO Corporation YTZ beads of 1.0 mmϕ, bead filling rate: 80%), the volume-average particle diameter of the pigment was measured as above, and a mill base having a volume-average particle diameter of 280 nm was produced.
Titanium dioxide JR-600A white pigment (manufactured by TAYCA Corporation): 60 parts
Nonionic pigment dispersant (manufactured by BYK): 10 parts
Water: 30 parts
Silicon defoaming agent (manufactured by BYK): 0.1 parts

Indigo pigment base 3 (hereinafter, "Indigo 3") was thoroughly stirred and mixed according to the following composition and was then milled with a bead mill (the beads used were Union Co., Ltd. glass beads of 3.0 mmϕ, bead filling rate: 80%), the volume-average particle diameter of the pigment was measured as above, and a mill base having a volume-average particle diameter of 500 nm was produced.
FASTPGEN BLUE LA5380 indigo pigment (manufactured by DIC Corporation): 40 parts
Nonionic pigment dispersant (manufactured by BYK): 10 parts
Water: 50 parts
Silicon defoaming agent (manufactured by BYK): 0.1 parts

### [Preparation of aqueous pigment dispersion for preparing aqueous ink-jet ink]

According to the composition below, the pigment concentration in an aqueous pigment dispersion was adjusted to 20 wt% in the organic pigment or carbon black (Indigo 1 to 3 and Black 1) and to 30 wt% in the titanium dioxide (White 1) to obtain aqueous pigment dispersions.
Pigment mill base: 50.0 parts
Binder for aqueous ink-jet ink: 37.5 parts
Aqueous medium (B): 10.0 parts
Water: balance

### [Preparation of aqueous ink-jet ink for plastic substrate]

According to the following ink composition below, the pigment concentration in an aqueous ink-jet ink for plastic substrates was adjusted to 5 wt% in the organic pigment or carbon black (Indigo 1 to 3 and Black 1) and to 8 wt% in the titanium dioxide (White 1) to obtain aqueous ink-jet inks for plastic substrates of Examples 1 to 8 and Comparative Examples 1 to 4.
Aqueous pigment dispersion: 4.0 parts
Propylene glycol: 10.0 parts
1,2-Hexanediol: 5.0 parts
Polyoxyethylene alkyl ether: 0.5 parts
Deionized water: balance

### <Resolubility evaluation>

Thirty microliters of the aqueous ink-jet ink for plastic substrates of each example having the respective adjusted pigment concentration was applied onto a slide glass and was left to stand in a dryer of 80°C for 10 minutes to produce each test plate. Subsequently, the plate was immersed in water of room temperature for 60 seconds, and whether the ink is dissolved again or not was visually verified.
**⊚**: No coloring component was observed on the slide glass and no undissolved granular content was observed in the immersion liquid when the slide glass was taken out after immersion for 30 seconds;
∘: A small amount of undissolved residue was observed on the slide glass or in the immersion liquid;
Δ: There was clearly undissolved matter on the slide glass on in the immersion liquid; and
×: There was significantly undissolved matter on the slide glass or in the immersion liquid.

Incidentally, a printing agent that is judged as "good" in this experiment shows resolubility in a screen recording method or can be easily discharged in an ink-jet recording method by a cleaning operation after a long period of printing pause.

### [Production of printing film for evaluation: ink-jet printing]

The ink cartridge of an ink-jet printer (manufactured by Seiko Epson Corporation, MJ-510C) was filled with the above aqueous ink-jet inks for plastic substrates having the adjusted pigment concentrations of Examples 1 to 8 and Comparative Examples 1 to 4, and a mat pattern was printed on a corona-treated polyethylene terephthalate (PET) film (manufactured by TOYOBO Co., Ltd., Ester E5100, thickness: 12 um) or a corona-treated polypropylene (OPP) biaxially oriented film (manufactured by TOYOBO Co., Ltd., PYLEN P2161, thickness: 20 um) shown in Tables 1 and 2. Subsequently, drying with a dryer and then further drying in an oven of 80°C for 10 minutes were performed to obtain each printed matter.

### <Ink discharge property evaluation>

Printing equivalent to ten sheets of an A4 solid pattern was performed by the procedure of the above ink-jet printing, then a check pattern was printed, and undischarged nozzles were evaluated by the following criteria:
**⊚**: Less than 1% of nozzles did not discharge;
∘: 1% or more and less than 5% of nozzles did not discharge; and
×: 5% or more of nozzles did not discharge.

### <Blocking resistance evaluation>

Each film was cut into a size of 4 cm by 4 cm, and the resulting pieces were stacked such that the printed surface and the non-printed surface of the printed matter were in contact with each other and were left to stand under a load of 5 Kgf/cm² in an environment of 40°C for 12 hours. Then, the condition of the transfer (offset) of the ink to the non-printed surface when the film was peeled off was visually judged based on the area rate (%) of the offset portion.
**⊚**: Transfer to non-printed surface was not observed at all;
∘: A small amount, less than 5%, of transfer due to offset was observed;
Δ: 5% or more and less than 20% of transfer due to offset was observed; and
×: 20% or more of transfer due to offset was observed.

### <Substrate adhesion evaluation>

Each printed matter was left to stand for one day, and cellophane tape (manufactured by Nichiban Co., Ltd., width: 12 mm) was then attached to the printed surface. The residual rate of the printed coating when one end of the cellophane tape was quickly peeled off in a direction perpendicular to the printed surface, the appearance, was visually judged based on the area rate.
**⊚**: The printed coating was not peeled off at all;
∘: 80% or more and less than 90% of the printed coating remained on the film;
Δ: 50% or more and less than 80% of the printed coating remained on the film; and
×: Only less than 50% of the printed coating remained on the film

Tables 1 and 2 show the results of evaluation of the ink-jet inks for plastic substrates.

**[Table 1]**

| Table 1 | | | Example 1 | Example 2 | Example 3 | Example 4 | Example 5 | Example 6 | Example 7 | Example 8 |
|---|---|---|---|---|---|---|---|---|---|---|
| Binder | | | (1) | (2) | (3) | (4) | (5) | (1) | (1) | (1) |
| Pigment mill base | | | Indigo 1 | Indigo 1 | Indigo 1 | Indigo 1 | Indigo 1 | Indigo 2 | Black 1 | White 1 |
| Pigment average particle diameter (nm) | | | 95 | 95 | 95 | 95 | 95 | 110 | 120 | 280 |
| Evaluation item | Ink discharge property | | ⊚ | ⊚ | ⊚ | ⊚ | ⊚ | ○ | ○ | ○ |
| | Resolubility | PET | ⊚ | ⊚ | ⊚ | ⊚ | ○ | ⊚ | ⊚ | ⊚ |
| | | OPP | ⊚ | ⊚ | ⊚ | ⊚ | ○ | ⊚ | ⊚ | ⊚ |
| | Blocking resistance | PET | ⊚ | ○ | ○ | ○ | ⊚ | ⊚ | ⊚ | ⊚ |
| | | OPP | ⊚ | ⊚ | ⊚ | ⊚ | ⊚ | ⊚ | ⊚ | ⊚ |
| | Adhesion | PET | ⊚ | ⊚ | ⊚ | ⊚ | ⊚ | ⊚ | ⊚ | ⊚ |
| | | OPP | ⊚ | ⊚ | ⊚ | ○ | ○ | ⊚ | ⊚ | ⊚ |

**[Table 2]**

| Table 2 | | | Comparative Example 1 | Comparative Example 2 | Comparative Example 3 | Comparative Example 4 |
|---|---|---|---|---|---|---|
| Binder | | | (6) | (7) | (8) | (1) |
| Pigment mill base | | | Indigo 1 | Indigo 1 | Indigo 1 | Indigo 3 |
| Pigment average particle diameter (nm) | | | 110 | 110 | 110 | 500 |
| Evaluation item | Ink discharge property | | ⊚ | ⊚ | × | × |
| | Resolubility | PET | × | ⊚ | × | ⊚ |
| | | OPP | × | ⊚ | × | ⊚ |
| | Blocking resistance | PET | ⊚ | × | ⊚ | ⊚ |
| | | OPP | ⊚ | Δ | ⊚ | ⊚ |
| | Adhesion | PET | ⊚ | ⊚ | ⊚ | ⊚ |
| | | OPP | ⊚ | ○ | ⊚ | ⊚ |

It could be confirmed that the aqueous ink-jet inks of Examples 1 to 8 according to the present invention is excellent in adhesion to plastic substrates, blocking resistance, and ink discharge properties during ink-jet printing. In contrast, the aqueous ink-jet inks of Comparative Examples 1 to 4 were inferior to the inks of Examples 1 to 8 in any of the characteristics.

Accordingly, it could be confirmed that the aqueous pigment dispersion of the present invention can be suitably used in an aqueous ink-jet ink for plastic substrates.

### <Examples 9 to 12 and Comparative Examples 5 and 6>

### (Synthesis Example 6: Preparation example of binder (9) for aqueous ink-jet ink)

In a nitrogen-purged vessel equipped with a thermometer, a nitrogen gas introduction pipe, and a stirrer, 275 parts by mass of polycarbonate diol (weight average molecular weight: 2,000) as a 1,6-hexanediol base, 2 parts by mass of polyoxytetramethylene glycol (molecular weight: 2,000), 79 parts by mass of isophorone diisocyanate, and 34 parts by mass of 2,2-dimethylolpropionic acid were reacted in a solvent mixture of 0.5 parts by mass of neopentyl glycol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 27 parts by mass of triethylamine, and 700 parts by mass of water was further added thereto, followed by sufficient stirring to obtain a urethane resin water dispersion. Subsequently, aging and desolventizing were performed to obtain a binder (9) for aqueous ink-jet ink containing 40 mass% of a nonvolatile content.

In this binder (9) for aqueous ink-jet ink, the rate of the alicyclic structure in the urethane resin was 888 mmol/kg, and the acid value was 36.

### (Synthesis Example 7: Preparation example of binder (10) for aqueous ink-jet ink)

In a nitrogen-purged vessel equipped with a thermometer, a nitrogen gas introduction pipe, and a stirrer, 222 parts by mass of polycarbonate diol (weight average molecular weight: 1,000) as a 1,6-hexanediol base, 144 parts by mass of isophorone diisocyanate, and 29 parts by mass of 2,2-dimethylolpropionic acid were reacted in a solvent mixture of 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 21 parts by mass of triethylamine, and 700 parts by mass of water and 12 parts by mass of ethylenediamine were further added thereto, followed by sufficient stirring to obtain a urethane resin water dispersion. Subsequently, aging and desolventizing were performed to obtain a binder (10) for aqueous ink-jet ink containing 40 mass% of a nonvolatile content.

In this binder (10) for aqueous ink-jet ink, the rate of the alicyclic structure in the urethane resin was 1,620 mmol/kg, and the acid value was 31.

### (Comparative Synthesis Example 4: Preparation example of binder (11) for aqueous ink-jet ink)

In a nitrogen-purged vessel equipped with a thermometer, a nitrogen gas introduction pipe, and a stirrer, 275 parts by mass of polycarbonate diol (weight average molecular weight: 2,000) as a 1,6-hexanediol base, 60 parts by mass of hexamethylene diisocyanate, and 34 parts by mass of 2,2-dimethylolpropionic acid were reacted in a solvent mixture of 0.5 parts by mass of neopentyl glycol and 200 parts by mass of methyl ethyl ketone to obtain an organic solvent solution of a urethane prepolymer having an isocyanate group at a molecular end.

Subsequently, a part or whole of the carboxyl groups possessed by the urethane prepolymer was neutralized by addition of 27 parts by mass of triethylamine, and 700 parts by mass of water was further added thereto, followed by sufficient stirring to obtain a urethane resin water dispersion. Subsequently, aging and desolventizing were performed to obtain a binder (11) for aqueous ink-jet ink containing 40 mass% of a nonvolatile content.

In this binder (11) for aqueous ink-jet ink, the rate of the alicyclic structure in the urethane resin was 0 mmol/kg, and the acid value was 36.

### [Production of mill dispersion 1]

In a mixing tank, 258 parts of BYK-190 (manufactured by BYK Japan K.K., nonvolatile content: 40%, acid value: 10, glass transition temperature: -61°C) as a dispersant, 9 parts of BYK-348 (manufactured by BYK Japan K.K.), 4 parts of BYK-019 (manufactured by BYK Japan K.K.), 783 parts of deionized water, and 646 parts of C.I. Pigment BLUE 15:3 (manufactured by DIC Corporation) were charged and mixed with a disperser (TK Homodisper 20 type, manufactured by Tokushu Kika Kogyo Co., Ltd.). The obtained mixture solution was circulated and dispersed (a system in which the dispersion liquid discharged from a dispersion device is returned to a mixing tank) with a dispersion device (picomill model: PCM-LR, manufactured by Asada Iron Works. Co., Ltd.) filled with zirconia beads with a diameter of 0.3 mm. During the dispersion process, the dispersion liquid temperature was controlled to 30°C or less by allowing cold water to pass through the jacket for cooling, the rotor peripheral speed of the dispersion device was fixed at 12 m/sec, and dispersion was performed for 2 hours. After completion of the dispersion, the dispersion undiluted solution was extracted from the mixing tank to obtain a mill dispersion 1 (pigment content: 30%).

The volume particle diameter of the pigment in the mill dispersion 1 was measured with Nanotrac WAVE II (manufactured by MicrotracBEL Corp.). As a result, the volume-average particle diameter (MV) of the pigment was 104 nm.

### [Production of mill dispersion 2]

A mill dispersion 2 in which the pigment has a volume-average particle diameter (MV) of 98 nm was obtained as above except that the dispersant in the mill dispersion 1 was changed to 109 parts of BYKJET-9151 (manufactured by BYK Japan K.K., nonvolatile content: 95%, acid value: 8, amine value: 18, glass transition temperature: -64°C).

### [Example 9: Manufacturing example of pigment dispersion]

A pigment dispersion 1 having a pigment content of 15% in terms of mass conversion was obtained by preparing and stirring 50 parts of the mill dispersion 1, 37.5 parts of aqueous polyurethane resin 1, 0.2 parts of Proxel GXL(S) (Lonza KK) as an antiseptic, and 12.3 parts of deionized water with a paint shaker (Toyo Seiki Seisaku-sho, Ltd., vibration frequency: 750/min) for 30 minutes.

### [Examples 10 to 12 and Comparative Examples 5 and 6]

Pigment dispersions 2 to 4 and comparative dispersions 1 and 2 were obtained as in Example 1 except that the compositions were changed to those shown in Table 3.

**[Table 3]**

| | | Example 9 | Example 10 | Example 11 | Example 12 | Comparative Example 5 | Comparative Example 6 |
|---|---|---|---|---|---|---|---|
| | | Pigment dispersion 1 | Pigment dispersion 2 | Pigment dispersion 3 | Pigment dispersion 4 | Comparative dispersion 1 | Comparative dispersion 2 |
| Mill dispersion | Mill dispersion 1 (Pigment content: 30%) | 50 parts | | 50 parts | 50 parts | 50 parts | 50 parts |
| | Mill dispersion 2 (Pigment content: 30%) | | 50 parts | | | | |
| Binder resin | Binder (9) (Nonvolatile content: 40%) | 30 parts | 30 parts | | 18.8 parts | | |
| | Binder (10) (Nonvolatile content: 40%) | | | 30 parts | | | |
| | Binder (11) (Nonvolatile content: 40%) | | | | | | 30 parts |
| Antiseptic | Proxel GXS(L) | 0.2 parts | 0.2 parts | 0.2 parts | 0.2 parts | 0.2 parts | 0.2 parts |
| Deionized water | | 19.8 parts | 19.8 parts | 19.8 parts | 31 parts | 49.8 parts | 19.8 parts |
| Total | | 100 parts | 100 parts | 100 parts | 100 parts | 100 parts | 100 parts |
| Pigment content | | 15% | 15% | 15% | 15% | 15% | 15% |

### [Examples 13 to 16 and Comparative Examples 7 and 8: Production of ink composition]

Compositions shown in Table 4 below were blended using the pigment dispersions 1 to 4 and comparative dispersions 1 and 2 obtained above and were stirred with a paint shaker for 30 minutes to manufacture ink compositions of Examples 13 to 16 and Comparative Examples 7 and 8.

### <Production of printed matter for evaluation>

The ink cartridge of an ink-jet printer (manufactured by Seiko Epson Corporation, MJ-510C) was filled with the ink compositions of Examples and Comparative Examples, and a mat pattern was printed on a corona-treated polyethylene terephthalate (PET) film (manufactured by TOYOBO Co., Ltd., Ester E5100, thickness: 12 um) or a corona-treated polypropylene (OPP) biaxially oriented film (manufactured by TOYOBO Co., Ltd., PYLEN P2161, thickness: 20 um). Subsequently, drying with a dryer and then further drying in an oven of 90°C for 10 minutes were performed to obtain each printed matter.

The obtained printed matters were used for evaluation by the evaluation method shown below. The results are collectively shown in Table 4.

### <Ink discharge property evaluation>

Printing equivalent to ten sheets of an A4 solid pattern was performed by the procedure of the above ink-jet printing, then a check pattern was printed, and undischarged nozzles were evaluated by criteria below. A grade of C or above is acceptable.
A: Less than 1% of nozzles did not discharge;
B: 1% or more and less than 3% of nozzles did not discharge;
C: 3% or more and less than 5% of nozzles did not discharge; and
D: 5% or more nozzles did not discharge.

### <Blocking resistance evaluation>

Each film was cut into a size of 4 cm by 4 cm, and the resulting pieces were stacked such that the printed surface and the non-printed surface of the printed matter were in contact with each other and were left to stand under a load of 5 Kgf/cm² in an environment of 50°C for 24 hours. Then, the condition of the transfer (offset) of the ink to the non-printed surface when the film was peeled off was visually judged based on the area rate (%) of the offset portion. A grade of C or above is acceptable.
A: Transfer to non-printed surface was not observed at all;
B: A small amount, less than 5%, of transfer due to offset was observed;
C: 5% or more and less than 10% of transfer due to offset was observed, although it was within an acceptable range; and
D: 10% or more of transfer due to offset was observed.

### <Laminate strength evaluation>

Laminate evaluation was performed according to JIS Z 1707: 2019, specifically as follows.

### (OPP film)

Aromatic ether-based adhesives (LX401 and SP60, both manufactured by DIC Corporation) were mixed and were diluted with ethyl acetate such that the nonvolatile content was 25% to prepare a heat-sealing adhesive. The adhesive was applied to the printed surface of an OPP film at 2 g/m², and a CCP film (PYLEN Film-CT P1128, manufactured by TOYOBO Co., Ltd.) was attached thereto with a heating roller laminate tester set to 40°C. Subsequently, curing was performed at 40°C for 3 days to produce a laminate film.

A test piece having a width of 10.0±0.1 mm and a developed length of 100 mm or more in perpendicular direction was taken from the produced laminate film.

The test piece was opened at 180° with the laminated portion at the center, and both ends of the test piece were attached to the grips of a constant speed extension type tensile tester with an interval of 50 mm or more between the grips. The maximum load (N/10 mm) when a tensile load was applied until the laminate portion was broken was determined, and the laminate strength was evaluated according to the criteria shown below.

### (PET film)

Laminate strength was evaluated as above except that aliphatic ester-based adhesives (LX703VL and KR-90, both manufactured by DIC Corporation) were used as the heat-sealing adhesives and that an LLDPE film (TUX-HC, manufactured by Mitsui Chemicals Tohcello, Inc.) was used as the attaching film.
**⊚**: The maximum load (N/10 mm) was 3 or more;
∘: The maximum load (N/10 mm) was 2 or more and less than 3;
Δ: The maximum load (N/10 mm) was 1 or more and less than 2; and
×: The maximum load (N/10 mm) was 0 or more and less than 1.

### <Substrate adhesion evaluation>

Substrate adhesion was evaluated by the same method as in Example 1 and so on.

**[Table 4]**

| | | | Example 13 | Example 14 | Example 15 | Example 16 | Comparative Example 7 | Comparative Example 8 |
|---|---|---|---|---|---|---|---|---|
| Ink composition | Dispersion | Dispersion name | Pigment dispersion 1 | Pigment dispersion 2 | Pigment dispersion 3 | Pigment dispersion 4 | Comparative dispersion 1 | Comparative dispersion 2 |
| | | Amount in ink (wt%) | 33.3 | 33.3 | 33.3 | 33.3 | 33.3 | 33.3 |
| | Solvent | Propylene glycol | 10 | 10 | 10 | 10 | 10 | 10 |
| | | 1.3-Butanediol | 5 | 5 | 5 | 5 | 5 | 5 |
| | | 1.2-Hexanediol | 3 | 3 | 3 | 3 | 3 | 3 |
| | | 2-Pyrrolidone | 10 | 10 | 10 | 10 | 10 | 10 |
| | Neutralizing agent | Triisopropanolamine | 3 | 3 | 3 | 3 | 3 | 3 |
| | Surfactant | BYK348 | 0.5 | 0.5 | 0.5 | 0.5 | 0.5 | 0.5 |
| | Deionized water | Amount in ink (wt%) | 35.2 | 35.2 | 35.2 | 35.2 | 35.2 | 35.2 |
| | Total | | 100 | 100 | 100 | 100 | 100 | 100 |
| Evaluation item | Ink discharge property | | C | C | B | B | A | C |
| | Blocking resistance | PET | B | B | C | A | B | D |
| | | OPP | B | B | C | A | B | D |
| | Laminate strength | PET | ⊚ | ⊚ | ⊚ | ⊚ | × | ⊚ |
| | | OPP | ⊚ | ⊚ | ⊚ | ⊚ | × | ⊚ |
| | Substrate adhesion | PET | ⊚ | ⊚ | ⊚ | ⊚ | × | ○ |
| | | OPP | ⊚ | ⊚ | ⊚ | ⊚ | × | ○ |

It could be confirmed that the aqueous ink-jet inks of Examples 13 to 16 according to the present invention are excellent in substrate adhesion to plastic substrates, blocking resistance, and ink discharge properties during ink-jet printing and also show excellent laminate strength when an adhesive is applied to a printed surface and a film is attached thereto.

In contrast, the aqueous ink-jet inks of Comparative Examples 7 and 8 were inferior to the inks of Examples 13 to 16 in every characteristic.

Accordingly, it could be confirmed that the aqueous pigment dispersion of the present invention can be suitably used in aqueous ink-jet inks for plastic substrates.

## Claims

1. An aqueous pigment dispersion for preparing an aqueous ink-jet ink for a plastic substrate, comprising a binder, a pigment, and an aqueous medium, wherein
the binder contains a urethane resin (A) that is a reaction product of a polyol (a1) including a polyol (a1-1) having an acid group and a polyol (a1-2) other than the polyol (a1-1) and a polyisocyanate (a2) including a polyisocyanate (a2-1) having an alicyclic structure and contains an aqueous medium (B);
the acid group possessed by the urethane resin (A) is neutralized;
the urethane resin (A) includes the alicyclic structure within a range of 500 to 5,000 mmol/kg based on the whole urethane resin (A); and
the pigment is dispersed in the aqueous pigment dispersion at a volume-average particle diameter of 50 to 400 nm,
provided that when the polyol (a1) does not include a polycarbonate polyol, a rate of the alicyclic structure possessed by the urethane resin (A) is 1,000 to 5,000 mmol/kg based on the whole urethane resin (A), and the acid group possessed by the urethane resin (A) is neutralized by a metal salt; and
when the polyol (a1) includes a polycarbonate polyol, the urethane resin (A) is not chain-extended or is polyamine-extended.

2. The aqueous pigment dispersion according to Claim 1 for preparing an aqueous ink-jet ink for a plastic substrate, comprising a binder, a pigment, and an aqueous medium, wherein
the binder contains a urethane resin (A) that is a reaction product of a polyol (a1) including a polyol (a1-1) having an acid group and a polyether polyol (a1-21) other than the polyol (a1-1) and a polyisocyanate (a2) including a polyisocyanate (a2-1) having an alicyclic structure and contains an aqueous medium (B);
the acid group possessed by the urethane resin (A) is neutralized with a metal salt;
the urethane resin (A) includes the alicyclic structure within a range of 1,000 to 5,000 mmol/kg based on the whole urethane resin (A); and
the pigment is dispersed in the aqueous pigment dispersion at a volume-average particle diameter of 50 to 400 nm.

3. The aqueous pigment dispersion according to Claim 1 for preparing an aqueous ink-jet ink for a plastic substrate, comprising a binder, a pigment, and an aqueous medium, wherein
the binder contains a urethane resin (A) that is a reaction product of a polyol (a1) including a polyol (a1-1) having an acid group and a polycarbonate polyol (a1-22) other than the polyol (a1-1) and a polyisocyanate (a2) including a polyisocyanate (a2-1) having an alicyclic structure and contains an aqueous medium (B);
the acid group possessed by the urethane resin (A) is neutralized;
the urethane resin (A) includes the alicyclic structure within a range of 500 to 5,000 mmol/kg based on the whole urethane resin (A); and
the pigment is dispersed in the aqueous pigment dispersion at a volume-average particle diameter of 50 to 400 nm.

4. The aqueous pigment dispersion according to any one of Claims 1 to 3, wherein the urethane resin (A) has an acid value within a range of 10 to 50.

5. The aqueous pigment dispersion according to any one of Claims 1 to 4, wherein a content of the binder is 5 to 30 mass% of the total amount of the aqueous pigment dispersion.

6. The aqueous pigment dispersion according to Claim 2, wherein the urethane resin (A) is hydrazine-extended.

7. The aqueous pigment dispersion according to any one of Claims 1 to 6, wherein a content of the pigment is 10 to 50 mass% of the total amount of the aqueous pigment dispersion.

8. An aqueous ink-jet ink for a plastic substrate, prepared by diluting the aqueous pigment dispersion according to Claim 7 with an aqueous medium such that a content of the pigment is 3 to 30 mass%.

9. A printed matter obtained by ink-jet printing with the aqueous ink-jet ink for a plastic substrate according to Claim 8.
